# EUROPÄISCHE PATENTSCHRIFT

(11) **EP 2 183 756 B1**
(45) Veröffentlichungstag und Bekanntmachung des Hinweises auf die Patenterteilung: **03.01.2018**
(21) Anmeldenummer: 08775071.7
(22) Anmeldetag: 15.07.2008
(51) Int. Cl.: B60R 25/04, H01H 9/18, H01H 9/16, H01H 13/02, B60R 16/00

(54) **SCHALTVORRICHTUNG**
SWITCHING APPARATUS
DISPOSITIF DE COMMUTATION

(30) Priorität: 25.07.2007 DE 102007035241
(43) Veröffentlichungstag der Anmeldung: 12.05.2010
(73) Patentinhaber: Huf Hülsbeck & Fürst GmbH & Co. KG, 42551 Velbert (DE)
(72) Erfinder: KIM, Tae-Sun, 52078 Aachen (DE); FELDERHOFF, Rainer, 42555 Velbert (DE)
(74) Vertreter: Vogel, Andreas
(86) Internationale Anmeldenummer: PCT/EP2008/059211
(87) Internationale Veröffentlichungsnummer: WO 2009/013176

(56) Entgegenhaltungen:
- EP-A- 0 869 522
- EP-A- 1 701 367
- DE-A1- 2 213 299
- DE-A1- 3 019 021
- DE-A1-102007 001 703
- DE-C1- 19 647 218
- US-A- 4 749 832

## Beschreibung

Die Erfindung betrifft eine Schaltvorrichtung zum Ein- bzw. Ausschalten eines Verbrauchers, insbesondere eines Motors od. dgl. in einem Fahrzeug, mit einem Gehäuse, einem Betätigungselement, einem Schaltelement, wobei das Schaltelement durch das Betätigungselement aktivierbar ist, mittels des Schaltelements wenigstens ein Schaltsignal für eine Steuereinheit erzeugbar ist, das Betätigungselement ein Symbolelement aufweist.

In der EP 1 468 884 A1 ist ein Zündschalter beschrieben, der zum Starten oder Abschalten eines Fahrzeugmotors dient. Der Zündschalter ist in der Nähe einer Lenksäule angeordnet und weist einen, in einem Gehäuse angeordneten, beweglichen Körper auf. Darüber hinaus ist in dem Zündschalter ein Schaltkörper integriert, welcher zum Detektieren einer Verschiebung des beweglichen Körpers dient. Des Weiteren befindet sich ein Symbolelement auf dem beweglichen Körper. Dieses Symbolelement dient zum Anzeigen eines Zustandes des Fahrzeugmotors. Bei solcherart Zündschaltern berührt ein Fahrer mit seinem Finger den beweglichen Körper und verschiebt diesen, wodurch der Schaltkörper den Motor startet oder abschaltet. Als nachteilig hat es sich bei solcherart von Zündschaltern erwiesen, dass das Symbolelement oftmals nicht eindeutig zu erkennen ist, wodurch ein Benutzer über den Zustand des Fahrzeuges im Unklaren verbleibt.

Aus den Druckschriften DE 30 19 021 A1 sowie US 4,749,832 sind Schaltvorrichtungen mit einem Betätigungselement bekannt, welches ebenfalls durch eine Lichtquelle beleuchtbar ist. Dabei ist auch nur ein Symbolelement mit einem Lichtbereich vorgesehen, aus dem das Licht der einen Lichtquelle austreten kann. Dabei ist das Symbolelement auch im Betätigungselement angeordnet. Auch in der Entgegenhaltung EP 0 869 522 A kommt - wie bei den beiden zuvor genannten Dokumenten - ein Druckschalter zum Einsatz, der durch eine Lichtquelle in Form einer Leuchtdiode beleuchtet wird.

Aus der Offenlegungsschrift DE 2 213 299 A1 ist ein lichtleitender Prisma für einen elektrischen Schalter bekannt, wobei der Prisma indirekt über einen Lichtleiter mit einer externen Lichtquelle verbunden ist. Auch diese elektrische Schaltvorrichtung mit dem Prisma weist ein Betätigungselement auf, welches durch das Prisma beleuchtbar ist.

Aus dem Dokument EP 1 701 362 A2 geht ein elektrischer Tastschalter mit einer Symbolbeleuchtungseinrichtung zur Ausleuchtung eines transparenten Bereichs des Betätigungselementes mit insgesamt zwei Lichtquellen hervor. Dabei wird das Licht einer ersten Lichtquelle über einen Prisma (auch Lichtstein genannt) zur Lichtaustrittsfläche am Betätigungselement weitergeleitet. Das Licht einer zweiten Lichtquelle gelangt hingegen ohne ein Prisma zur Lichtaustrittsfläche im Betätigungselement.

Ferner ist aus der Druckschrift EP 0 869 522 A1 ein gattungsbildender Stand der Technik für eine Schaltvorrichtung bekannt. Diese Vorrichtung verfügt über eine Lichtquelle, die das Licht nicht direkt zur Beleuchtung des Betätigungselements aussendet.

Es ist Aufgabe der vorliegenden Erfindung, eine Schaltvorrichtung zum Ein- bzw. Ausschalten eines Verbrauchers zu schaffen, bei der die genannten Nachteile vermieden werden, insbesondere eine preiswerte und kompakte Schaltvorrichtung zum Ein- bzw. Ausschalten eines Verbrauchers bereitzustellen, die eine leichte und benutzerfreundliche Bedienung sicherstellt.

Zur Lösung dieser Aufgabe wird eine Schaltvorrichtung zum Ein- bzw. Ausschalten eines Verbrauchers mit den Merkmalen des Anspruches 1 vorgeschlagen. In den abhängigen Ansprüchen sind bevorzugte Weiterbildungen aufgeführt.

Es ist vorgesehen, dass ein erstes Lichtleitelement ein erstes Licht mindestens einer ersten Lichtquelle derart leitet, dass das Symbolelement gleichförmig ausgeleuchtet ist.

Das homogene beleuchtete Symbolelement ermöglicht es einem Benutzer eindeutig den Zustand der Schaltvorrichtung zu erkennen, so dass Bedienungsfehler vermieden werden. Um eine gleichmäßige Ausleuchtung des Symbolelementes zu erzielen, ist erfindungsgemäß vorgesehen, dass ein erstes Lichtleitelement das erste Licht leitet. Aufgabe des ersten Lichtleitelementes ist es, dass oftmals kollimierte erste Licht zu steuern und gegebenenfalls aufzuspalten, und so eine gleichförmige Ausleuchtung des Symbolelementes zu ermöglichen.

In einer ersten vorteilhaften Ausgestaltung ist es vorgesehen, dass das erste Lichtleitelement das erste Licht reflektiert. Bei dem ersten Lichtleitelement handelt es sich um ein mechanisches Objekt, dass an seiner Oberfläche das erste Licht in Richtung des Symbolelementes reflektiert. Vorzugsweise kann diese Reflektion diffus geschehen, um eine homogene Verteilung eines Lichtflusses zu erzielen. Die diffuse Reflektion lässt sich insbesondere durch eine aufgeraute Oberfläche des ersten Lichtleitelementes erzielen. Fällt das erste Licht auf die aufgeraute Oberfläche, so reflektiert das erste Lichtleitelement das erste Licht mit einer stochastischen Winkelverteilung.

Um eine erhöhte Bedienerfreundlichkeit zu erzielen, kann das Symbolelement auf dem Betätigungselement angeordnet sein und einen potenziellen Benutzer über einen Zustand des Fahrzeuges informieren. In diesem Fall hat es sich als vorteilhaft erwiesen, wenn das erste Lichtleitelement innerhalb des Gehäuses und hinter dem Betätigungselement angeordnet ist. Dadurch ist eine rückseitige Beleuchtung des Symbolelementes mittels des ersten Lichtes möglich. Vorteilhafterweise ist das erste Lichtleitelement an dem Betätigungselement angeformt. Diese Ausführungsvariante ist besonders dann zu bevorzugen, wenn sowohl das Betätigungselement als auch das Lichtleitelement aus einem Kunststoff hergestellt sind. Denn so lassen sich das Betätigungselement und das erste Lichtleitelement als ein einheitliches Bauteil produzieren. Bevorzugt wird diese einstückige Kombination durch ein Spritzgießen, Spritzblasen oder Spritzformen hergestellt.

Eine weitere vorteilhafte Ausführungsvariante der Schaltvorrichtung zeichnet sich dadurch aus, dass das erste Lichtleitelement kappen- und/oder schirmartig die erste Lichtquelle zumindest teilweise umfasst. Mittels eines derart gestalteten ersten Lichtleitelementes lässt sich ein scheinwerferartiges System aus erstem Lichtleitelement und erster Lichtquelle erstellen. Unter der Annahme, dass das Symbolelement in das Betätigungselement integriert ist, kann die erste Lichtquelle in das Gehäuse hineinstrahlen. Ein rotationsparaboloidartig ausgestaltetes erstes Lichtleitelement kann das kollimierte erste Licht auffangen und in Richtung des Betätigungselementes bzw. des Symbolelementes umleiten. In einer weiteren vorteilhaften Ausgestaltung weist das erste Lichtleitelement eine Mehrzahl von Reflektorflächen auf. Solch ein erstes Lichtleitelement ergibt sich beispielsweise aus einer Kombination von drei dreieckartigen Reflektorflächen, die in Kombination einen Tripelspiegel formen. Dieser Tripelspiegel ermöglicht insbesondere eine zielgerichtete und im Vorhinein leicht berechenbare Reflektion des eingestrahlten ersten Lichtes. Dabei weist eine Öffnungsseite des ersten Lichtleitelementes dem Betätigungselement zu. Als Öffnungsseite wird dabei jener Bereich des Lichtleitelementes bezeichnet, aus dem das erste Licht austritt. Wird folglich in einem Abschnitt des Lichtleitelementes das erste Licht eingestrahlt und tritt dieses an einem anderen Abschnitt aus, so ist definitionsgemäß der zuletzt genannte Abschnitt die Öffnungsseite. Handelt es sich bei dem ersten Lichtleitelement um einen paraboloidartig, kappen- und/oder schirmartig ausgestalteten Reflektor, so ist die Öffnungsseite im Allgemeinen dem Betätigungselement zugewandt.

Um eine hohe Effizienz zu erreichen, kann in einer weiteren vorteilhaften Ausgestaltung die Reflektorfläche zumindest teilweise mit einer Reflektorschicht versehen sein, wobei insbesondere die Reflektorschicht das erste Licht diffus reflektiert. Durch die Reflektorschicht wird ein hoher Anteil des eingestrahlten ersten Lichtes in Richtung des Symbolelementes reflektiert. Gleichzeitig reduziert die Reflektorschicht jenen Anteil des ersten Lichtes, der in dem ersten Lichtleitelement absorbiert wird, was eine Aufheizung des ersten Lichtleitelementes verhindert. Je nach Anwendungszweck hat es sich als vorteilhaft erwiesen, einen weißen oder mit Metallpartikeln versetzten Lack als Reflektorschicht zu verwenden. Solcher Art Lacke sind insbesondere dann einzusetzen, wenn das erste Lichtleitelement aus einem Kunststoff oder aus einem Metall wie Aluminium hergestellt wurde. Ist hingegen das erste Lichtleitelement aus Edelstahl hergestellt, kann die Reflektorschicht auch dadurch erzeugt werden, dass die Oberfläche des ersten Lichtleitelementes hochglanzpoliert wird. Zusätzlich kann die Reflektorschicht ein lumeniszierendes und/oder fluoreszierendes Material aufweisen.

Je nach verwendeter erster Lichtquelle kann das erste Licht dieses nahezu parallel verlassen. Oftmals reicht ein solcherart kollimierter Lichtstrahl allerdings nicht aus, um eine gleichmäßige Beleuchtung des Symbolelementes sicherzustellen. Folglich ist in einer weiteren vorteilhaften Ausgestaltung vorgesehen, dass das erste Lichtleitelement ein Streumittel aufweist, welches für eine Aufweitung des kollimierten Lichtstrahles sorgt.

Allerdings darf die Aufweitung des Lichtstrahles nicht zu einer Reduktion der homogenen Verteilung des Lichtflusses auf das beleuchtete Symbolelemente führen. Folglich hat es sich als vorteilhaft erwiesen, eines der folgenden Streumittel zu verwenden: eine Streuscheibe, eine Streuausbuchtung oder eine Streulinse. Die aufgezählten Streumittel stellen sicher, dass ein kollimierter Lichtstrahl gleichmäßig aufgeweitet wird und eine homogene Beleuchtung auch eines großflächigen Symbolelementes gewährleistet ist. Vorteilhafterweise handelt es sich bei der Streulinse um ein Element aus Glas oder Plexiglas, welches insbesondere angepasst ist an die Wellenlänge des ersten Lichtes, um eine geringe Absorption zu erzielen. Das Streumittel kann materialeinheitlich mit dem Lichtleitelement verbunden sein und ebenfalls eine Reflektorschicht aufweisen. Häufig ist das Streumittel derart angeordnet, dass kein erstes Licht direkt aus der ersten Lichtquelle auf das Symbolelement treffen kann. Vielmehr reflektiert das Streumittel jenes erste Licht auf das erste Lichtleitelement, von wo es dann in Richtung des Symbolelementes reflektiert wird. Diese Vorgehensweise reduziert die Wahrscheinlichkeit für Beleuchtungsschwankungen. Solcherart Beleuchtungsschwankungen sind für einen potenziellen Benutzer sichtbar, da bestimmte Bereiche des Symbolelementes heller leuchten als andere. Insgesamt hat es sich herausgestellt, dass Beleuchtungsschwankungen für einen Benutzer eher unangenehm sind und deshalb vermieden werden sollten.

In einer vorteilhaften Ausgestaltung der Schaltvorrichtung kann diese eine Platine aufweisen. Die Platine dient der mechanischen Befestigung und der elektrischen Verbindung von elektronischen Bauteilen. Solch eine Platine kann aus einer isolierenden Grundplatte hergestellt werden, auf der Verbindungsleitungen aus einer dünnen Schicht leitfähigen Materials aufgebracht sind. Da das Schaltelement der Schaltvorrichtung als ein elektronisches Bauteil ausgeformt sein kann, hat es sich als vorteilhaft erwiesen, dieses auf der Platine anzuordnen und mittels dieser zu bestromen. Somit kann die Platine auch genutzt werden, um eine elektrische Versorgung der ersten Lichtquelle sicherzustellen. Da die Platine eine Grundplatte aufweist, ist eine feste und dauerhafte Befestigung des ersten Lichtleitelementes einfach und preiswert herstellbar. Darüber hinaus kann die Platine mit allen Elementen vor einer Integration in das Gehäuse bestückt werden. Folglich können die erste Lichtquelle und das erste Lichtleitelement präzise ausgerichtet auf der Platine angeordnet werden, ohne dass es einer komplexen Integration unterhalb des Gehäuses bedarf.

Zur Verbindung des ersten Lichtleitelementes mit der Schaltvorrichtung kann in einer vorteilhaften Ausgestaltung das erste Lichtleitelement ein Rastmittel aufweisen, wobei das Rastmittel mit einem Gegenrastmittel der Schaltvorrichtung zusammenwirkt. Bei dem Rastmittel kann es sich insbesondere um ein Clip-element handeln, welches kraft-und/oder formschlüssig mit einem Aufnahmeelement zusammenwirkt und für eine reversibel lösbare Verbindung sorgt. Je nach Ausgestaltung der Schaltvorrichtung und der Anordnung des Symbolelementes kann das Gegenrastmittel an mindestens einem der folgenden Teile angeordnet ist: an der Platine, dem Gehäuse, dem Betätigungselement oder der ersten Lichtquelle. Neben einer reversibel lösbaren Verbindung des Lichtleitelementes mit der Schaltvorrichtung, kann das erste Lichtleitelement auch in die Schaltvorrichtung eingeklebt, aufgelötet oder aufgedampft werden. Solcherart stoffschlüssigen Verbindungen sind einfach und preiswert herzustellen und im Allgemeinen unbeeinflussbar von Umgebungsbedingungen. Zur Verbindung des ersten Lichtleitelementes mit der Schaltvorrichtung können die gängigen Klebstoffe Verwendung finden. Gleichfalls ist es möglich, dass das erste Lichtleitelement lasertransparent ausgestaltet ist und die Schaltvorrichtung laserabsorbierend, wodurch ein Verbinden der beiden Elemente durch Laserschweißen möglich ist.

Die erfindungsgemäße Schaltvorrichtung zeichnet sich dadurch aus, dass diese eine zweite Lichtquelle aufweist. Die zweite Lichtquelle kann das Symbolelement beleuchten, falls die erste Lichtquelle ausfällt. Dazu kann das erste Lichtleitelement das erste Licht der ersten Lichtquelle und ein zweites Licht der zweiten Lichtquelle derart leiten, dass das Symbolelement gleichförmig ausgeleuchtet wird. Um dieses sicherzustellen, muss das erste Lichtleitelement entsprechend geformte Reflektorbereiche sowohl für die erste als auch die zweite Lichtquelle aufweisen. Dazu kann das erste Lichtleitelement mehrere stufenartig angeordnete Reflektorflächen besitzen, wobei jeweils eine Reflektorstufe einer Lichtquelle zugeordnet ist. In einer weiteren Ausgestaltungsvariante kann das erste Licht und das zweite Licht der beiden Lichtquellen eine unterschiedliche Wellenlänge aufweisen, um das Symbolelement in unterschiedlichen Farben auszuleuchten.

Vorteilhafterweise sind die erste und die zweite Lichtquelle mit einer Rechnereinheit verbunden, welche einen Schaltzustand der Lichtquellen steuert. So ist es möglich, durch die Rechnereinheit entweder die erste oder die zweite oder beide Lichtquellen zu aktivieren. Dieses hat den Vorteil, dass einem Benutzer eine Mehrzahl von Schaltzuständen durch farbliche Veränderungen des Symbolelementes dargestellt werden können.
Eine weitere vorteilhafte Ausgestaltung der Schaltvorrichtung zeichnet sich dadurch aus, dass ein zweites Lichtleitelement das zweite Licht der zweiten Lichtquelle leitet. In dieser Ausführungsvariante ist jeder der beiden Lichtquellen ein individuelles Lichtleitelement zugeordnet. Im Gegensatz zu einem ersten Lichtleitelement, dass das Licht zweier Lichtquellen leitet, kann bei dieser Ausführungsvariante die mechanische Größe des Lichtleitelementes reduziert werden. Darüber hinaus kann das erste und zweite Lichtleitelement jeweils mit einer individuellen Reflektorschicht versehen sein, die an die Wellenlänge des ersten bzw. zweiten Lichtes angepasst ist. Dadurch ist eine gleichmäßige Beleuchtung des Symbolelementes sichergestellt. Eine Lichtemission des ersten und des zweiten Lichtes erfolgt parallel zu einer Betätigungsfläche des Betätigungselementes. In der erfindungsgemäßen Schaltvorrichtung dient das Betätigungselement dazu, von einem Benutzer manipuliert zu werden, um einen Verbraucher ein- bzw. auszuschalten. Dabei berührt der Benutzer die Betätigungsfläche des Betätigungselementes, welche zumindest die Größe eines Fingers aufweist. Häufig weist die Betätigungsfläche aus haptischen Gründen eine ebene oder kuppelartige Geometrie auf. Innerhalb des Betätigungselementes ist das Symbolelement angeordnet und vorzugsweise hinter dem Symbolelement die erste Lichtquelle. Allgemein bestimmt die räumliche Ausgestaltung der Schaltvorrichtung die Anordnung der ersten und/oder zweiten Lichtquelle. Beispielsweise kann die erste und zweite Lichtquelle auf der Platine angeordnet sein, die blattartig von dem Betätigungselement wegführt. In diesem Fall erfolgt die Lichtemission der ersten und zweiten Lichtquelle parallel zu der Betätigungsfläche des Bewegungselementes, also orthogonal zur Fläche der Platine. Dann muss das erste Lichtleitelement das erste und/oder zweite Licht um 90° ablenken, damit das Symbolelement beleuchtet wird. Gleichfalls denkbar ist es, dass das erste Lichtleitelement derart angeordnet ist, dass die Lichtemission von der Betätigungsfläche des Betätigungselements weg geschieht. In diesem Fall haben sich paraboloidartige Lichtleitelemente als vorteilhaft erwiesen, welche das erste und/oder zweite Licht in Richtung des Symbolelementes reflektieren.

In einer weiteren vorteilhaften Ausführungsvariante weist das Symbolelement wenigstens einen ersten Bereich und einen zweiten Bereich auf. Die beiden Bereiche können dazu dienen, einem Benutzer unterschiedliche Informationen anzuzeigen. Das erste Licht der ersten Lichtquelle kann den ersten Bereich und ein zweites Licht der zweiten Lichtquelle den zweiten Bereich gleichförmig ausleuchtet. Somit können die beiden Bereiche und damit unterschiedliche Informationen homogen illuminiert werden, um dem Benutzer einen Zustand der Schaltvorrichtung eindeutig anzuzeigen.

In einer weiteren vorteilhaften Ausgestaltung ist die erste und/oder die zweite Lichtquelle wenigstens eine der Folgenden: eine LED, eine OLED oder eine Fluoreszenz-Lampe. In Abhängigkeit vom Einsatzgebiet, können einzelne oder mehrere der genannten Beleuchtungselemente in einer Lichtquelle zusammengefasst sein. Eine lichtemittierende Diode (LED) ist ein Halbleiterbauteil, das inkohärentes Licht mit einem schmalen Spektrum emittiert. Die Wellenlänge des emittierten Lichtes hängt ab von den Halbleiterbauteilen sowie möglichen Dotierungen. Die ebenfalls nutzbare organische lichtemittierende Diode (OLED) ist ein spezieller Typ einer LED, in welcher die lichtemittierende Schicht aus organischen Komponenten geformt ist.

In einer weiteren vorteilhaften Ausführungsform weist das erste Lichtleitelement wenigstens ein mechanisches Führungselement auf. Das Führungselement dient zur Positionierung des ersten Lichtleitelementes relativ zur ersten Lichtquelle. Dazu kann das mechanische Führungselement schienenartig ausgestaltet sein und mit einer Seitenflanke der ersten Lichtquelle zusammenwirken, um eine eindeutige Positionierung des ersten Lichtleitelementes sicherzustellen. Vorteilhafterweise ist das Führungselement derart ausgestaltet, dass das erste Lichtleitelement nur in einer Ausrichtung auf die erste Lichtquelle aufgebracht werden kann.

Je nach Anwendungszweck hat es sich als vorteilhaft erwiesen, wenn das Symbolelement an und/oder auf und/oder in dem Betätigungselement angeordnet ist. So kann es sich beispielsweise bei dem Symbolelement um eine Buchstabenreihe handeln, die den Benutzer über den Zustand eines Fahrzeuges informieren. Dazu kann das Symbolelement in das Betätigungselement eingefräst sein. Gleichfalls ist es denkbar, dass das Symbolelement aus einer Anzahl von lichtleitenden Elementen geformt wird, welche in das Betätigungselement eingelegt sind. Vorteilhafterweise ist das Symbolelement folienartig ausgeformt und bedeckt zumindest Teile einer vom Benutzer abgewandten Rückseite des Betätigungselementes. So kann Licht, welches nicht direkt auf die einzelnen im Betätigungselement angeordneten Elemente des Symbolelementes trifft dennoch dahin geleitet werden. Darüber hinaus können das Betätigungselement und das Symbolelement einstückig ausgeformt sein.

In einer vorteilhaften Ausführungsform ist die erste und/oder zweite Lichtquelle über ein Bussystem mit wenigstens einer Rechnereinheit verbunden, wobei das Bussystem zum uni- und/oder bidirektionalen Austausch mindestens eines Steuerstatus der ersten und/oder zweiten Lichtquelle dient. Um den Steuerstatus zu übermitteln, hat es sich als vorteilhaft erwiesen, wenn das Bussystem eine serielle oder eine parallele Architektur aufweist. Eine parallele Architektur bezeichnet dabei eine digitale Übertragung bei der mehrere Bits gleichzeitig - also parallel - übertragen werden. Im Gegensatz dazu wird bei der seriellen Datenübertragung die Information bitweise hintereinander über das Datenübertragungsmedium übertragen. Vorteilhafterweise weist das Bussystem eine der folgenden parallelen Architekturen auf: ATA (Advanced Technology Attachment), GPIB (General Purpose Interface Bus) oder HIPPI (High Performance Parallel Interface). Soll eine serielle Systemarchitektur Verwendung finden hat es sich als vorteilhaft erwiesen, eine der folgenden Architekturen zu benutzen: ACCESS.bus, ASI-Bus, ByteFlight, Controller Area Network (CAN), Europäischer Installationsbus (EIB), ISYGLT (Innovativ SYstem für die GebäudeLeitTechnik), KNX, Local Control Network (LCN), FlexRay, Universal Serial Bus (USB), FireWire, eSATA (External Serial ATA), Profibus, MOST-Bus, Time-Triggered Protocol (TTP), LIN-Bus, ControlNet, INTERBUS, MIL-Bus, SafetyBUS p oder Spacewire.

Die erfindungsgemäße Schaltvorrichtung kann - aufgrund der platzsparenden Ausgestaltung - auch im oder am Lenkrad selbst, insbesondere im Bereich eines Emblems oder im Bereich von Prall- oder Griffflächen angeordnet werden. Von dieser Schaltvorrichtung geht nur ein oder mehrere elektrische Leiter aus, so dass eine einfach Verkabelung selbst im Lenkrad möglich ist. Es ist sogar denkbar, die Schaltvorrichtung am Schalthebel, an einer Mittelkonsole, an einer Multifunktionsbedieneinheit am Armaturenbrett, an einer Innenverkleidung einer Tür, am Dachhimmel, am Innenrückfahrspiegel oder links bzw. rechts vom Lenkrad im Fahrzeug anzuordnen. Damit kann der Bedienungskomfort beim Starten eines Motors oder dergleichen deutlich erhöht werden, da die ergonomischen Belange des Fahrers berücksichtigt werden können.

Die vorliegende Erfindung ist ebenfalls für ein Sicherheitssystem zur schlüssellosen Aktivierung bzw. Deaktivierung einer Anlage oder eines Gerätes, insbesondere eines Lenkradschlosses (was als ein funktionswesentliches Bauteil in einem Fahrzeug angesehen wird) oder eines Motors in einem Fahrzeug nutzbar. Dieses Sicherheitssystem ist mit einer Schaltvorrichtung nach einem der Ansprüche 1 bis 18 und einem mobilen ID-Geber ausgestattet, wobei zwischen der Schaltvorrichtung und dem ID-Geber eine Datenübertragung stattfinden kann. Zusätzlich ist in dem Sicherheitssystem eine Steuereinheit vorgesehen, die zumindest die Datenübertragung zwischen der Schaltvorrichtung und dem mobilen ID-Geber steuert. Bei diesem Sicherheitssystem muss sich der Fahrer bzw. Bediener des Fahrzeuges nicht aktiv identifizieren, um eine Freischaltung oder Aktivierung des Systems zu bewirken. Allein durch die Betätigung der Schaltvorrichtung, insbesondere des Betätigungselementes wird der Identifizierungsvorgang automatisch gestartet, wobei die Datenübertragung dazu genutzt wird, das codierte Weck- bzw. Aktivierungssignal von der Schaltvorrichtung auf den ID-Geber zu übertragen. Nachdem der mobile ID-Geber dieses Wecksignal empfangen und überprüft hat, sendet er einen Identifizierungscode an das Sicherheitssystem zurück. Dieses kann einerseits auch über die Datenübertragung stattfinden oder über eine zusätzliche Empfangseinheit, die per Funk die Identifikationsdaten von dem mobilen ID-Geber empfängt und diese an die Steuereinheit weiterleitet. Die Steuereinheit vergleicht dann die Identifikationsdaten mit vorgegebenen Identifikationsdaten und nimmt bei einer positiven Identifikation eine entsprechende Steuerung der einzelnen Verbraucher oder Geräte vor, je nach dem, welche Schaltstellung oder welches Schaltsignal der Schaltvorrichtung vorliegt. Somit kann beispielsweise das elektrische Lenkradschloss entriegelt werden und das Motormanagement-System freigeschaltet werden, um den Motor in einem Fahrzeug zu starten.

Weitere Maßnahmen und Vorteile der Erfindung ergeben sich aus den Ansprüchen, der nachfolgenden Beschreibung und den Zeichnungen. In den Zeichnungen ist die Erfindung in mehreren Ausführungsbeispielen dargestellt. Es zeigen:
- Figur 1: eine Frontansicht einer Schaltvorrichtung,
- Figur 2: eine schematische Schnittzeichnung der Schaltvorrichtung,
- Figur 3: eine Platine der Schaltvorrichtung und
- Figur 4: eine Schnittzeichnung eines ersten Lichtleitelementes.

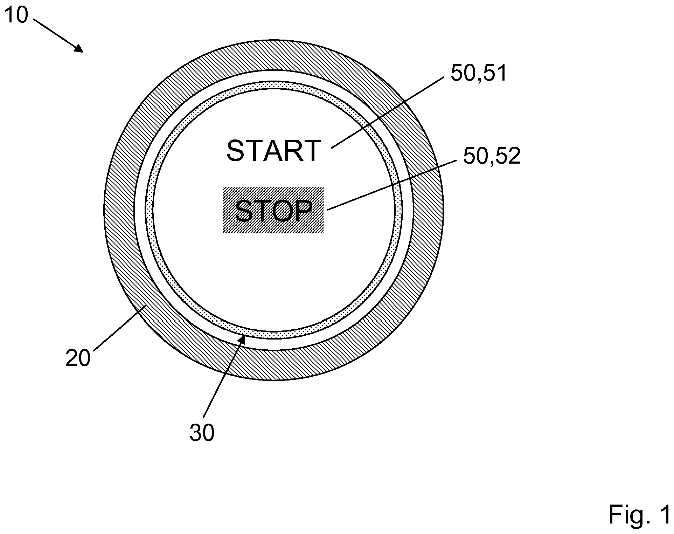

In Fig. 1 ist eine Frontansicht einer Schaltvorrichtung 10 zum Ein- bzw. Ausschalten eines Verbrauchers, insbesondere eines Motors in einem Fahrzeug, dargestellt. Ein Gehäuse 20 der Schaltvorrichtung 10 umgibt ein Betätigungselement 30 kranzförmig. Mittels des Betätigungselementes 30 ist ein nicht dargestelltes Schaltelement 40 aktivierbar. Die Aktivierung kann beispielsweise durch ein Einschieben des Betätigungselementes 30 in Richtung der Zeichnungsebene in das Gehäuse 20 ausgeführt werden. In dem dargestellten Ausführungsbeispiel handelt es sich bei der Schaltvorrichtung 10 um einen Start-/Stoppschalter für ein Fahrzeug. Auf dem Betätigungselement 30 ist ein Symbolelement 50 angeordnet, welches die Worte "Start" und "Stopp" formt.

Bei bekannten Schaltvorrichtungen hat es sich als nachteilig herausgestellt, dass die Symbolelemente von einem Benutzer häufig nicht eindeutig erkannt werden können. Dadurch ergibt sich die Möglichkeit, dass der Benutzer einer Fehlinterpretation über den Zustand des Fahrzeuges erliegt. Um diesen Nachteil zu überwinden, ist erfindungsgemäß vorgesehen, dass ein erstes Lichtleitelement ein erstes Licht mindestens einer ersten Lichtquelle derart leitet, dass das Symbolelement 50 gleichförmig ausgeleuchtet ist.

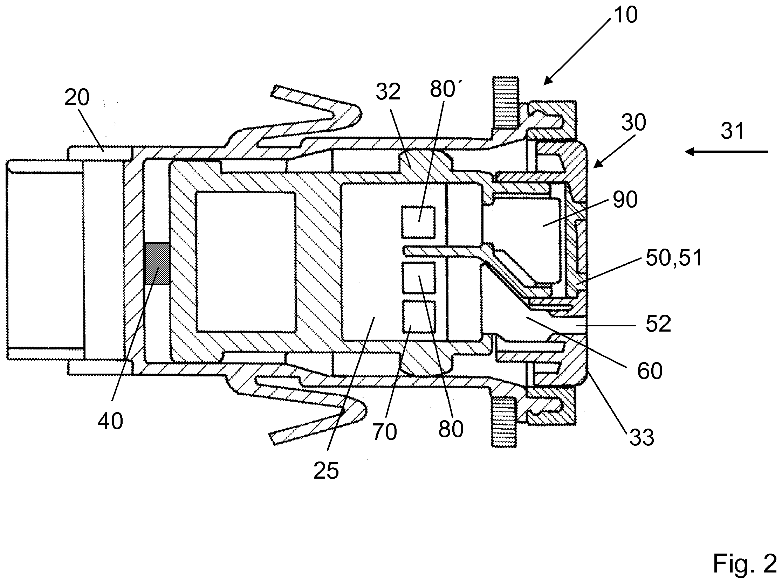

Der Aufbau einer derart ausgestalteten Schaltvorrichtung 10 verdeutlicht die Schnittzeichnung in Fig. 2. Zu erkennen ist das Gehäuse 20, in welchem das Betätigungselement 30 angeordnet ist. Im hinteren Bereich des Gehäuses 20 ist zwischen einem Quersteg und einem Rahmen 32 des Betätigungselementes 30 ein Schaltelement 40 angeordnet. Durch ein Einschieben des Betätigungselementes 30 in Richtung des Bewegungspfeiles 31 kann ein Schaltsignal für eine nicht dargestellte Steuereinheit generiert werden. An eine Betätigungsfläche 33 des Betätigungselementes 30 schließt sich in das Gehäuseinnere der Rahmen 32 an. Innerhalb des Rahmens 32 ist eine Platine 25 angeordnet. Diese Platine 25 dient als Basis für die der Schaltvorrichtung 10 innewohnende Elektronik. Des Weiteren sind auf der Platine 25 die erste Lichtquelle 70 sowie zwei weitere zweite Lichtquellen 80, 80' angeordnet. Das von den Lichtquellen 70, 80, 80' emittierte Licht fließt in die Zeichnungsebene hinein. Um das Symbolelement 50 gleichmäßig zu beleuchten, weist die erfindungsgemäße Schaltvorrichtung 10 ein erstes Lichtleitelement 60 und ein zweites Lichtleitelement 90 auf.

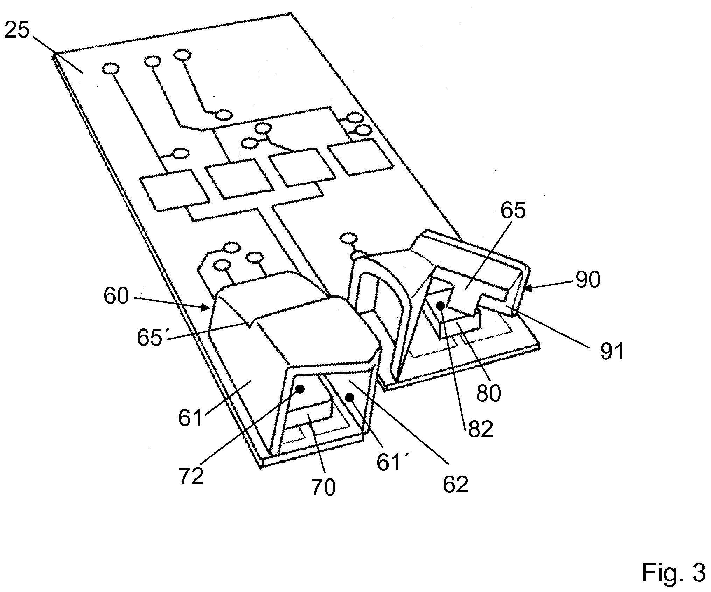

Zur Verdeutlichung der Funktionsweise der erfindungsgemäßen Schaltvorrichtung 10 soll die Fig. 3 dienen. In dieser Figur sind die Platine 25, die erste Lichtquelle 70 und das erste Lichtleitelement 60 dargestellt. Bei der ersten Lichtquelle 70 handelt es sich um eine quaderförmige LED, welche auf der Platine 25 angeordnet ist. Diese erste Lichtquelle 70 wird von dem haubenförmigen ersten Lichtleitelement 60 überdeckt. Dieses erste Lichtleitelement 60 ist mittels wenigstens eines Rastmittels mit der Platine 25 verbunden. Bei dem nicht dargestellten Rastmittel kann es sich beispielsweise um einen Clip handeln, der mit einem entsprechend geformten Gegenrastmittel der Platine 25 kraft- und/oder formschlüssig zusammenwirkt. Das erste Lichtleitelement 60 weist eine Mehrzahl von Reflektorflächen 61, 61' auf, an denen das von der ersten Lichtquelle 70 ausgestrahlte erste Licht 71 diffus reflektiert wird. Dazu können die Reflektorflächen 61, 61' zumindest bereichsweise mit einer Reflektorschicht überzogen sein. So kann es sich bei der Reflektorschicht um einen weißen Lack handeln, welcher eine hohe Reflexionsgrad aufweist, und somit einen großen Anteil des von der ersten Lichtquelle 70 abgestrahlten ersten Lichtes 71 durch eine Öffnung 62 des ersten Lichtleitelementes 60 ausstrahlt. Vor der Öffnung 62 ist erfindungsgemäß das Symbolelement 50 angeordnet. Aufgrund der Formgebung des ersten Lichtleitelementes 60 sowie der Beschichtung der Reflektorflächen 61, 61' mit der Reflektorschicht entsteht ein homogener Lichtfluss, der durch die Öffnung 62 tritt und das Symbolelement 50 gleichmäßig ausleuchtet. Dieses ermöglicht einem Benutzer der erfindungsgemäßen Schaltvorrichtung 10 immer eindeutig über den Zustand der Schaltvorrichtung 10 informiert zu sein.

Um eine Mehrzahl von Informationen darzustellen, kann das Symbolelement 50 wenigstens einen ersten Bereich 51 und einen zweiten Bereich 52 aufweisen. Zur gleichmäßigen Beleuchtung des zweiten Bereiches 52 ist auf der Platine 25 in Fig. 3 eine zweite Lichtquelle 80 montiert. Diese zweite Lichtquelle 80 wird umgeben von einem schirmartig ausgestalteten zweiten Lichtleitelement 90. Dieses zweite Lichtleitelement 90 sorgt dafür, dass ein von der zweiten Lichtquellen 80 abgestrahltes zweites Licht 81 homogen und gleichförmig den zweiten Bereich 52 des Symbolelementes 50 ausleuchtet. In dem dargestellten Ausführungsbeispiel tritt das zweite Licht 81 aus einem Lichtaustritt 82 der zweiten Lichtquelle 80 heraus und wird an den Reflektorflächen 91 des zweiten Lichtleitelementes 90 reflektiert. Damit keine Helligkeitsverteilung bei der Ausleuchtung des Symbolelementes 50 auftreten, weist das zweite Lichtleitelement 90 ein Streumittel 65 auf. Falls das zweite Licht 81 direkt von der zweiten Lichtquelle 80 auf das Streuelement 65 trifft, reflektiert dieses das zweite Licht 81 auf die Reflektorflächen 91 des zweiten Lichtleitelementes 90. Dadurch wird eine direkte Beleuchtung des Symbolelementes 50 durch die zweite Lichtquelle 80 verhindert. Vielmehr ist sichergestellt, dass das zweite Licht 81 der zweiten Lichtquelle 80 immer zuerst von dem zweiten Lichtleitelement 90 reflektiert wurde, um so eine gleichförmige Ausleuchtung zu erzielen.

Das erste Lichtleitelement 60 weist ebenfalls ein Streumittel 65' auf. Im Gegensatz zu dem Streumittel 65 des zweiten Lichtleitelementes 90 handelt es sich bei dem Streumittel 65 um eine Einbiegung innerhalb der kappenartigen Reflektorfläche 61. Das aus einer Lichtaustrittsfläche 72 austretende erste Licht 71 der ersten Lichtquelle 70 wird an dem Streumittel 65' diffus reflektiert, um ebenfalls eine gleichförmige Ausleuchtung des Symbolelementes 50 zu erzielen.

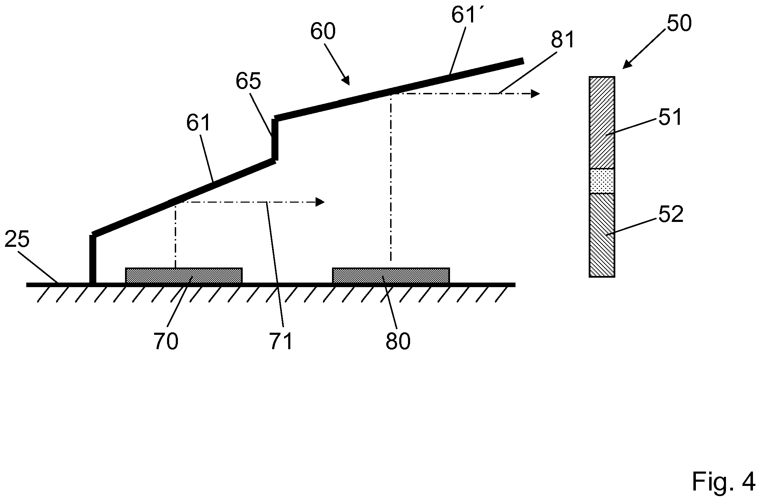

In Fig. 4 ist eine weitere mögliche Ausgestaltungsvariante des erfindungsgemäßen ersten Lichtleitelementes 60 dargestellt. Ausgangspunkt für diese Ausgestaltung des Lichtleitelementes 60 ist es, dass das Symbolelement 50 zwei Bereiche 51, 52 aufweist. Diese beiden Bereiche 51, 52 können unterschiedliche Informationen für einen Benutzer darstellen. Um den ersten 51 bzw. zweiten Bereich 52 gleichförmig auszuleuchten, sind auf der Platine 25 die erste Lichtquelle 70 und die zweite Lichtquelle 80 hintereinander angeordnet. Das erste Licht 71 der ersten Lichtquelle 70 wird an der Reflektorfläche 61 des ersten Lichtleitelementes 60 in Richtung des zweiten Bereiches 52 abgelenkt. Durch eine entsprechende Beschichtung der Reflektorfläche 61 wird ein diffuser Lichtfluss des ersten Lichtes 71 erzeugt, welche garantiert, dass der zweite Bereich 52 vollständig gleichmäßig beleuchtet wird. Räumlich vor der ersten Lichtquelle 70 ist die zweite Lichtquelle 80 angeordnet. Das von dieser zweiten Lichtquelle 80 emittierte zweite Licht 81 wird an der Reflektorfläche 61' reflektiert, um den ersten Bereich 51 des Symbolelementes 50 gleichmäßig auszuleuchten. Erfindungsgemäß ist zwischen der Reflektorfläche 61 und der Reflektorfläche 61' ein Streumittel 65 angeordnet. Dieses Streumittel 65 sorgt in der dargestellten Ausführungsvariante dafür, dass keine Vermischung des ersten Lichtes 71 und des zweiten Lichtes 72 stattfindet. Dieses verhindert eine ungewollte Beleuchtung eines der beiden Bereiche 51, 52 durch eine diesem nicht zugeordnete Lichtquelle 70, 80. Diese Ausgestaltung des Lichtleitelementes 60 hat sich insbesondere dann als vorteilhaft erwiesen, wenn das erste Licht 71 und das zweite Licht 81 unterschiedliche Wellenlängen aufweisen. Die so gestaltete farbliche Differenzierung zwischen dem ersten Bereich 51 und dem zweiten Bereich 52 erleichtert es einem potenziellen Benutzer sich über den Zustand der Schaltvorrichtung 10 zu unterrichten.

### Bezugszeichenliste

- 10: Schaltvorrichtung

- 20: Gehäuse
- 25: Platine

- 30: Betätigungselement
- 31: Bewegung des Betätigungselementes
- 32: Rahmen
- 33: Betätigungsfläche

- 40: Schaltelement

- 50: Symbolelement
- 51: erster Bereich
- 52: zweiter Bereich

- 60: erstes Lichtleitelement
- 61,61': Reflektorfläche
- 62: Öffnung des ersten Lichtleitelementes 60
- 65,65': Streumittel

- 70: erste Lichtquelle
- 71: erstes Licht
- 72: Lichtaustritt der ersten Lichtquelle 70

- 80,80': zweite Lichtquelle
- 81: zweites Licht
- 82: Lichtaustritt der zweiten Lichtquelle 80

- 90: zweites Lichtleitelement
- 91: Reflektorfläche

## Patentansprüche

1. Schaltvorrichtung (10) zum Ein- bzw. Ausschalten eines Verbrauchers, insbesondere eines Motors od. dgl. in einem Fahrzeug,
mit einem Gehäuse (20), einem Betätigungselement (30), einem Schaltelement (40), wobei
das Schaltelement (40) durch das Betätigungselement (30) aktivierbar ist,
mittels des Schaltelements (40) wenigstens ein Schaltsignal für eine Steuereinheit erzeugbar ist,
das Betätigungselement (30) ein Symbolelement (50) aufweist, und
dass ein erstes Lichtleitelement (60) ein erstes Licht (71) mindestens einer ersten Lichtquelle (70) derart leitet, dass das Symbolelement (50) gleichförmig ausgeleuchtet ist,
**dadurch gekennzeichnet,**
**dass** die Schaltvorrichtung (10) eine zweite Lichtquelle (80,80') für ein zweites Licht (81) aufweist, und
**dass** eine Lichtemission des ersten (71) und des zweiten Lichtes (81) parallel zu einer Betätigungsfläche (33) des Betätigungselementes (30) ist.

2. Schaltvorrichtung (10) nach Anspruch 1,
**dadurch gekennzeichnet,**
**dass** das erste Lichtleitelement (60) das erste Licht (71) reflektiert, insbesondere diffuse reflektiert.

3. Schaltvorrichtung (10) nach Anspruch 1 oder 2,
**dadurch gekennzeichnet,**
**dass** das erste Lichtleitelement (60) innerhalb des Gehäuses und hinter dem Betätigungselement (30) angeordnet ist, insbesondere dass das erste Lichtleitelement (60) an dem Betätigungselement (30) angeformt ist.

4. Schaltvorrichtung (10) nach einem der vorhergehenden Ansprüche,
**dadurch gekennzeichnet,**
**dass** das erste Lichtleitelement (60) kappen- und/oder schirmartig die erste Lichtquelle (70) zumindest teilweise umfasst, insbesondere dass das erste Lichtleitelement (60) eine Mehrzahl an Reflektorflächen (61,61') aufweist, insbesondere dass eine Öffnungsseite (62) des kappen- und/oder schirmartigen ersten Lichtleitelements (60) dem Betätigungselement (30) zugewandt ist.

5. Schaltvorrichtung (10) nach Anspruch 4,
**dadurch gekennzeichnet,**
**dass** die Reflektorflächen (61,61') zumindest bereichsweise mit einer Reflektorschicht versehen sind, wobei insbesondere die Reflektorschicht das erste Licht (71) diffus reflektiert, bevorzugt dass die Reflektorschicht ein lumeniszierendes Material aufweist.

6. Schaltvorrichtung (10) nach einem der vorhergehenden Ansprüche,
**dadurch gekennzeichnet,**
**dass** die erste Lichtquelle (70) zumindest teilweise in dem ersten Lichtleitelement (60) angeordnet ist.

7. Schaltvorrichtung (10) nach einem der vorhergehenden Ansprüche,
**dadurch gekennzeichnet,**
**dass** das erste Lichtleitelement (60) ein Streumittel (65,65') aufweist, wobei insbesondere das Streumittel (65,65') eines der folgenden ist: eine Streuscheibe, eine Streuausbuchtung oder eine Streulinse.

8. Schaltvorrichtung (10) nach einem der vorhergehenden Ansprüche,
**dadurch gekennzeichnet,**
**dass** die Schaltvorrichtung (10) eine Platine (25) aufweist, wobei insbesondere das erste Lichtleitelement (60) und die erste Lichtquelle (70) auf der Platine (25) angeordnet sind.

9. Schaltvorrichtung (10) nach einem der vorhergehenden Ansprüche,
**dadurch gekennzeichnet,**
**dass** das erste Lichtleitelement (60) ein Rastmittel aufweist, wobei das Rastmittel mit einem Gegenrastmittel der Schaltvorrichtung (10) zusammenwirkt, insbesondere dass das Gegenrastmittel an mindestens einem der folgenden angeordnet ist: an der Platine (25), dem Gehäuse (20), dem Betätigungselement (30) oder der ersten Lichtquelle (70).

10. Schaltvorrichtung (10) nach einem der vorhergehenden Ansprüche,
**dadurch gekennzeichnet,**
**dass** das erste Licht (71) und das zweite Licht (81) unterschiedliche Wellenlängen aufweisen.

11. Schaltvorrichtung (10) nach einem der vorhergehenden Ansprüche,
**dadurch gekennzeichnet,**
**dass** ein zweites Lichtleitelement (60) das zweite Licht (81) der zweiten Lichtquelle (80,80') leitet.

12. Schaltvorrichtung (10) nach einem der vorhergehenden Ansprüche,
**dadurch gekennzeichnet,**
**dass** das Symbolelement (50) wenigstens einen ersten Bereich (51) und einen zweiten Bereich (52) aufweist.

13. Schaltvorrichtung (10) nach einem der vorhergehenden Ansprüche,
**dadurch gekennzeichnet,**
**dass** das erste Licht (71) der ersten Lichtquelle (70) den ersten Bereich (51) und ein zweites Licht (81) der zweiten Lichtquelle (80) den zweiten Bereich (52) gleichförmig ausleuchtet.

14. Schaltvorrichtung (10) nach einem der vorhergehenden Ansprüche,
**dadurch gekennzeichnet,**
**dass** die erste (70) und/oder die zweite Lichtquelle (80) wenigstens eine der folgenden ist: eine LED, eine OLED, oder eine Fluoreszenz-Lampe.

15. Schaltvorrichtung (10) nach einem der vorhergehenden Ansprüche,
**dadurch gekennzeichnet,**
**dass** das Lichtleitelement (60) wenigstens ein mechanisches Führungselement aufweist, wobei das Führungselement zur Positionierung des ersten Lichtleitelementes (60) relativ zur ersten Lichtquelle (70) dient.

16. Schaltvorrichtung (10) nach einem der vorhergehenden Ansprüche,
**dadurch gekennzeichnet,**
**dass** Symbolelement (50) folienartig ausgeformt ist, insbesondere dass das Symbolelement (50) an und/oder auf und/oder in dem Betätigungselement (30) angeordnet ist, insbesondere dass das Betätigungselement (30) und das Symbolelement (50) einstückig sind.

## Claims

1. A switch device (10) for switching a load on or off, especially an engine, etc., in a vehicle,
with a housing (20), an activation element (30), and a switch element (40),
the switch element (40) being activatable by the activation element (30),
at least one switch signal for a control unit being generatable by means of the switch element (40),
the activation element (30) having a symbol element (50), and
that a first light-guide element (60) guides a first light (71) of at least a first light source (70), so that the symbol element (50) is illuminated uniformly,
**characterized in**
**that** the switch device (10) has a second light source (80, 80') for a second light (81), and that an emission of the first light (71) and of the second light (81) is parallel to an activation surface (33) of the activation element (30).

2. A switch device (10) according to claim 1,
**characterized in**
**that** the first light-guide element (60) reflects the first light (71), especially reflects it diffusely.

3. A switch device (10) according to claim 1 or 2,
**characterized in**
**that** the first light-guide element (60) is arranged within the housing and behind the activation element (30), especially in that the first light guide element (60) is molded onto the activation element (30).

4. A switch device (10) according to one of the preceding claims,
**characterized in**
**that** the first light-guide element (60) encloses the first light source (70) at least partially in a cap-like and/or screen-like manner, especially in that the first light-guide element (60) has a number of reflector surfaces (61, 61'), especially in that an opening side (62) of the cap-like and/or screen-like first light-guide element (60) faces the activation element (30).

5. A switch device (10) according to claim 4,
**characterized in**
**that** the reflector surfaces (61, 61') are provided at least in areas with a reflector layer, in whereby the reflector layer, in particular, diffusely reflects the first light (71), preferably in that the reflector layer has a luminescent material.

6. A switch device (10) according to one of the preceding claims,
**characterized in**
**that** the first light source (70) is arranged at least partially in the first light-guide element (60).

7. A switch device (10) according to one of the preceding claims,
**characterized in**
**that** the first light-guide element (60) has a scattering device (65, 65'), whereby the scattering device (65, 65'), in particular, is one of the following: a diffusing disk, a diffusing dome, or a diverging lens.

8. A switch device (10) according to one of the preceding claims,
**characterized in**
**that** the switch device (10) has a circuit board (25), whereby, especially the first light-guide element (60) and the first light source (70) are arranged on the circuit board (25).

9. A switch device (10) according to one of the preceding claims,
**characterized in**
**that** the first light-guide element (60) has a snap device, the snap device cooperating with a mating snap device of the switch device (10), especially that the mating snap device is arranged on at least one of the following: the circuit board (25), the housing (20), the activation element (30), or the first light source (70).

10. A switch device (10) according to one of the preceding claims,
**characterized in**
**that** the first light (71) and the second light (81) have different wavelengths.

11. A switch device (10) according to one of the preceding claims,
**characterized in**
**that** a second light guide element (60) guides the second light (80) of the second light source (80, 80').

12. A switch device (10) according to one of the preceding claims,
**characterized in**
**that** the symbol element (50) has at least a first area (51) and a second area (52).

13. A switch device (10) according to claim 10,
**characterized in**
**that** the first light (71) of the first light source (70) illuminates the first area (51) and a second light (81) of the second light source (80) illuminates the second area (52) uniformly.

14. A switch device (10) according to one of the preceding claims,
**characterized in**
**that** the first (70) and/or second light source (80) is at least one of the following: an LED, an OLED, or a fluorescent lamp.

15. A switch device (10) according to one of the preceding claims,
**characterized in**
**that** the light-guide element (60) has at least one mechanical guide element, the guide element being used to position the first light-guide element (60) with respect to the first light source (70).

16. A switch device (10) according to one of the preceding claims,
**characterized in**
**that** the symbol element (50) is designed like a film, especially in that the symbol element (50) is arranged at, on, and/or in the activation element (30), especially in that the activation element (30) and the symbol element (50) are in one piece.

## Revendications

1. Dispositif de commutation (10) respectivement dévolu à la mise en circuit ou hors circuit d'un appareil consommateur, en particulier d'un moteur ou d'un élément similaire situé dans un véhicule,
comprenant un boîtier (20), un élément d'actionnement (30), un élément de commutation (40), sachant
que l'élément de commutation (40) peut être activé par l'intermédiaire de l'élément d'actionnement (30),
qu'au moins un signal de commutation, destiné à une unité de commande, peut être engendré au moyen dudit élément de commutation (40),
que ledit élément d'actionnement (30) comporte un élément (50) à symboles, et qu'un premier élément (60) de guidage de lumière guide une première lumière (71) d'au moins une première source lumineuse (70) de façon telle que ledit élément (50) à symboles soit éclairé uniformément,
**caractérisé par le fait**
**que** ledit dispositif de commutation (10) présente une seconde source lumineuse (80, 80') dédiée à une seconde lumière (81), et
**qu'**une émission lumineuse des première (71) et seconde (81) lumières est parallèle à une surface d'actionnement (33) de l'élément d'actionnement (30).

2. Dispositif de commutation (10) selon la revendication 1,
**caractérisé par le fait**
**que** le premier élément (60) de guidage de lumière réfléchit la première lumière (71), et la réfléchit notamment de manière diffuse.

3. Dispositif de commutation (10) selon la revendication 1 ou 2,
**caractérisé par le fait**
**que** le premier élément (60) de guidage de lumière est placé à l'intérieur du boîtier et derrière l'élément d'actionnement (30) ; notamment par le fait que ledit premier élément (60) de guidage de lumière fait corps avec ledit élément d'actionnement (30).

4. Dispositif de commutation (10) selon l'une des revendications précédentes,
**caractérisé par le fait**
**que** le premier élément (60) de guidage de lumière englobe au moins partiellement la première source lumineuse (70), à la manière d'un capuchon et/ou d'un parapluie ; notamment par le fait que ledit premier élément (60) de guidage de lumière comporte une pluralité de surfaces réflectrices (61, 61') ; notamment par le fait qu'un côté ouverture (62) dudit premier élément (60) de guidage de lumière, du type capuchon et/ou parapluie, est tourné vers l'élément d'actionnement (30).

5. Dispositif de commutation (10) selon la revendication 4,
**caractérisé par le fait**
**que** les surfaces réflectrices (61, 61') sont pourvues d'une couche réflectrice, au moins par zones, sachant notamment que ladite couche réflectrice réfléchit la première lumière (71) de manière diffuse, de préférence par le fait que ladite couche réflectrice est dotée d'un matériau luminescent.

6. Dispositif de commutation (10) selon l'une des revendications précédentes,
**caractérisé par le fait**
**que** la première source lumineuse (70) est logée, au moins en partie, dans le premier élément (60) de guidage de lumière.

7. Dispositif de commutation (10) selon l'une des revendications précédentes,
**caractérisé par le fait**
**que** le premier élément (60) de guidage de lumière comporte un moyen diffuseur (65, 65'), sachant notamment que ledit moyen diffuseur (65, 65') se présente comme l'un des éléments suivants : un disque de diffusion, une protubérance de diffusion ou une lentille de diffusion.

8. Dispositif de commutation (10) selon l'une des revendications précédentes,
**caractérisé par le fait**
**que** ledit dispositif de commutation (10) est muni d'une platine (25), sachant notamment que le premier élément (60) de guidage de lumière et la première source lumineuse (70) sont disposés sur ladite platine (25).

9. Dispositif de commutation (10) selon l'une des revendications précédentes,
**caractérisé par le fait**
**que** le premier élément (60) de guidage de lumière comporte un moyen d'encliquetage, ledit moyen d'encliquetage coopérant avec un moyen d'encliquetage complémentaire dudit dispositif de commutation (10) ; notamment par le fait que ledit moyen d'encliquetage complémentaire se trouve sur au moins l'un des éléments suivants : sur la platine (25), sur le boîtier (20), sur l'élément d'actionnement (30) ou sur la première source lumineuse (70).

10. Dispositif de commutation (10) selon l'une des revendications précédentes,
**caractérisé par le fait**
**que** la première lumière (71) et la seconde lumière (81) présentent des longueurs d'ondes différentes.

11. Dispositif de commutation (10) selon l'une des revendications précédentes,
**caractérisé par le fait**
**qu'**un second élément (60) de guidage de lumière guide la seconde lumière (81) de la seconde source lumineuse (80, 80').

12. Dispositif de commutation (10) selon l'une des revendications précédentes,
**caractérisé par le fait**
**que** l'élément (50) à symboles comprend au moins une première région (51) et une seconde région (52).

13. Dispositif de commutation (10) selon l'une des revendications précédentes,
**caractérisé par le fait**
**que** la première lumière (71) de la première source lumineuse (70) et une seconde lumière (81) de la seconde source lumineuse (80) assurent, respectivement, un éclairage uniforme de la première région (51) et de la seconde région (52).

14. Dispositif de commutation (10) selon l'une des revendications précédentes,
**caractérisé par le fait**
**que** la première (70) et/ou la seconde (80) source(s) lumineuse(s) se présente(nt) comme au moins l'un des éléments suivants : une LED, une OLED ou une lampe fluorescente.

15. Dispositif de commutation (10) selon l'une des revendications précédentes,
**caractérisé par le fait**
**que** l'élément (60) de guidage de lumière comporte au moins un élément de guidage mécanique, ledit élément de guidage mécanique servant au positionnement du premier élément (60) de guidage de lumière par rapport à la première source lumineuse (70).

16. Dispositif de commutation (10) selon l'une des revendications précédentes,
**caractérisé par le fait**
**que** l'élément (50) à symboles est configuré à la manière d'un film ; notamment par le fait que ledit élément (50) à symboles est placé contre et/ou sur et/ou dans l'élément d'actionnement (30) ; notamment par le fait que ledit élément d'actionnement (30) et ledit élément (50) à symboles forment un seul tenant.
